# EUROPÄISCHE PATENTSCHRIFT

(11) **EP 2 224 049 B1**
(45) Veröffentlichungstag und Bekanntmachung des Hinweises auf die Patenterteilung: **17.10.2012**
(21) Anmeldenummer: 10006037.5
(22) Anmeldetag: 11.06.2010
(51) Int. Cl.: D06F 39/00, A47L 15/42

(54) **Reinigungsgerät mit Abwassertank und Wärmepumpe und Verfahren zur Steuerung dieses Reinigungsgeräts**
Cleaning device with waste water tank and heat pump and method for controlling this cleaning device
Appareil de nettoyage avec un réservoir d'eau usée et une pompe à chaleur et procédé pour contrôler cet appareil

(43) Veröffentlichungstag der Anmeldung: 01.09.2010
(73) Patentinhaber: V-Zug AG, 6301 Zug (CH)
(72) Erfinder: Schellenberg, Guido, 8038 Zürich (CH); Dober, Ernst, 6036 Dierikon (CH); Pfenniger, Peter, 6003 Luzern (CH)
(74) Vertreter: Sutter, Kurt

(56) Entgegenhaltungen:
- EP-A1- 2 096 203
- EP-A2- 2 193 741
- DE-A1- 4 435 846

## Beschreibung

### Gebiet der Erfindung

Die Erfindung betrifft ein Reinigungsgerät, insbesondere eine Waschmaschine oder einen Geschirrspüler, mit einem Bottich zur Aufnahme des zu reinigenden Guts und mit einem Abwassertank zum Zwischenspeichern von Abwasser aus dem Bottich. Weiter besitzt das Gerät eine Wärmepumpe, um dem Abwassertank Wärme zu entziehen und dem Prozesswasser im Bottich zuzuführen. Die Erfindung betrifft auch ein Verfahren zum Steuern eines solchen Geräts.

### Hintergrund

Ein derartiges Gerät in Form einer Haushaltwaschmaschine wird in EP 2 096 203 beschrieben. Es besitzt einen Bottich zur Aufnahme einer Trommel, in welcher die zu reinigende Wäsche untergebracht wird. Weiter ist ein Abwassertank vorgesehen, in welchem Prozesswasser aus dem Bottich vor dem Abführen zwischengelagert werden kann. Um dem Prozesswasser im Abwassertank Wärme zu entziehen, ist eine Wärmepumpe vorgesehen, mit welcher Wärme vom Abwassertank zum Prozesswasser im Bottich transferiert werden kann.

### Darstellung der Erfindung

Es stellt sich die Aufgabe, die Effizienz eines solchen Geräts zu verbessern. Diese Aufgabe wird vom Reinigungsgerät und vom Verfahren gemäss den unabhängigen Ansprüchen erfüllt.

Entsprechend ist die Steuerung des Geräts also dazu ausgestaltet, die Wärmepumpe derart zu steuern, dass dem Abwassertank mit der Wärmepumpe so lange Wärme entzogen wird, dass ein Teil des Prozesswassers im Abwassertank gefriert. Dies ermöglicht es, dank der Nutzung der Latenzwärme aus dem Phasenübergang, dem Abwassertank eine deutlich grössere Wärmemenge zu entziehen.

Vorzugsweise ist weiter vorgesehen, dass mindestens ein Teil des im Abwassertank befindlichen Eises wieder aufgeschmolzen wird, indem Wasser aus dem Bottich in den Abwassertank geführt wird.

Beispielsweise wird das Prozesswasser im Bottich in einer Prozessphase, z.B. zu Beginn der Prozessphase, erwärmt, indem mit der Wärmepumpe dem Abwassertank Wärme entzogen wird. Dabei wird das Wasser im Abwassertank teilweise gefroren. Das verbleibende flüssige Wasser im Abwassertank kann dann abgelassen werden. Dann kann, später in der Prozessphase, z.B. gegen deren Ende, erwärmtes Prozesswasser aus dem Bottich in den Abwassertank geführt werden, um dort gefrorenes Abwasser zu schmelzen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung der Komponenten einer Waschmaschine und
Fig. 2 eine Ausführung des Abwassertanks.

### Wege zur Ausführung der Erfindung

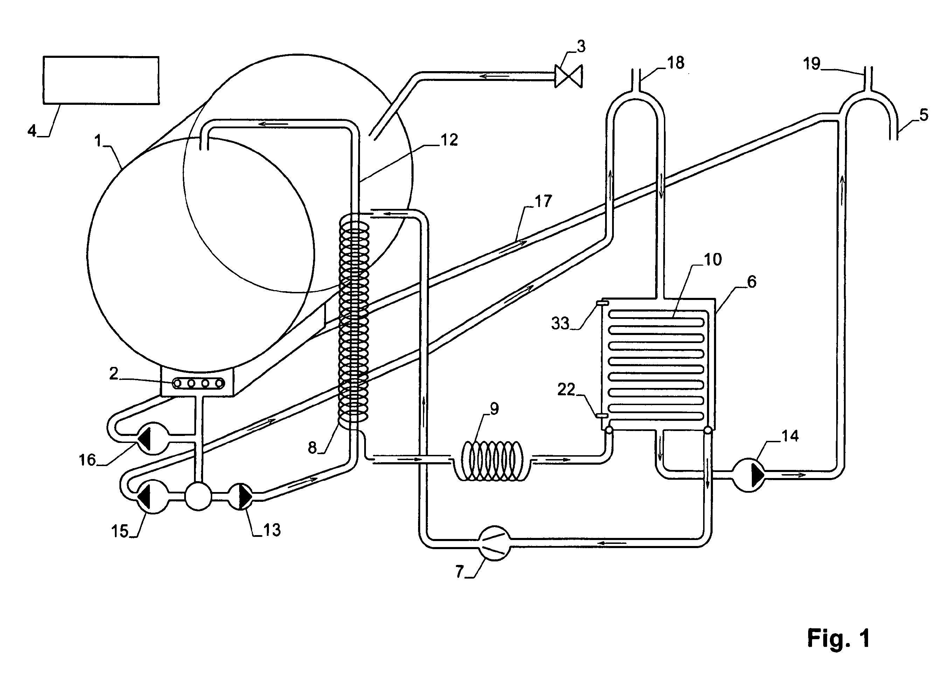

Die in Fig. 1 schematisch dargestellte Waschmaschine besitzt einen Bottich 1, in welchem in der Regel eine Trommel (nicht gezeigt) zur Aufnahme der zu waschenden Wäsche angeordnet ist. Am Bottich 1 ist (optional) eine elektrische Heizung 2 angeordnet, welche dazu dient, Prozesswasser elektrisch auf die gewünschte Temperatur zu heizen. Weiter besitzt das Gerät in bekannter Weise einen Trommelantrieb um die Trommel zu drehen. Eine Steuerung 4 kontrolliert und steuert die Operationen aller Komponenten. Ein derart ausgestaltetes Gerät ist dem Fachmann bekannt.

Frischwasser wird dem Gerät zur Verwendung als Prozesswasser über ein Frischwasserventil 3 zugeführt. Gebrauchtes Wasser wird in eine Abwasserleitung 5 abgepumpt. Auch diese Komponenten sind dem Fachmann grundsätzlich bekannt.

In der Ausführung nach Fig. 1 kann das Abwasser, d.h. das verbrauchte Prozesswasser, aus dem Bottich 1 über einen Abwassertank 6 geführt werden, bevor es zur Abwasserleitung 5 gelangt. Das Gerät besitzt weiter eine Wärmepumpe umfassend einen Kompressor 7, von welchem ein Wärmepumpenmedium zu einem Kondensator 8 gepumpt wird, wo unter Abgabe von Wärme eine Verflüssigung stattfindet. Vom Kondensator 8 gelangt das Medium über ein Expansionsventil 9 zu einem Verdampfer 10, wo das Medium unter Aufnahme von Wärme verdampft. Vom Verdampfer 10 läuft das Medium zurück zum Kompressor 7.

Der Begriff "Expansionsventil" umfasst dabei jegliche Art von Kapillaren, Drosseln oder dergleichen, die geeignet sind, den Druck des in der Wärmepumpe gepumpten Mediums vor dem Verdampfer zu reduzieren.

In der in Fig. 1 gezeigten Ausführung ist der Kondensator 8 an einer Zirkulationsleitung 12 angeordnet. Es ist eine Zirkulationspumpe 13 vorgesehen, um Prozesswasser von unterhalb des Bottichs 1 durch die Zirkulationsleitung in einen oberen Bereich des Bottichs 1 zu pumpen, wo es wieder in den Bottich 1 eingespritzt wird. Ist die Wärmepumpe im Betrieb, wird auf diese Weise dem Prozesswasser im Bottich Wärme zugeführt.

Es ist denkbar, den Kondensator 8 auch direkt am Bottich, am Ablaufbereich unterhalb des Bottichs oder an der Zirkulationspumpe 13 anzuordnen.

Der Verdampfer 10 ist thermisch mit dem Behälter 6 und somit mit dem sich im Behälter 6 befindlichen Abwasser gekoppelt. Er kann innerhalb des Behälters 6 oder in oder an dessen Wand angeordnet sein.

In der vorliegenden Ausführung des Geräts sind insgesamt vier Pumpen vorgesehen:
- Eine erste Pumpe 14 dient dazu, Prozesswasser aus dem Abwassertank 6 in die Abwasserleitung 5 zu fördern.
- Eine zweite Pumpe 15 ist zwischen dem Ablaufbereich des Bottichs 1 und dem Abwassertank 6 angeordnet. Sie dient dazu, Prozesswasser aus dem Bottich 1 in den Abwassertank 6 zu fördern.
- Eine dritte Pumpe 16 ist zwischen dem Ablaufbereich des Bottichs und einer Bypass-Leitung 17 angeordnet. Die Bypass-Leitung 17 führt am Abwassertank 6 vorbei zur Abwasserleitung 5, so dass die dritte Pumpe 16 dazu verendet werden kann, Prozesswasser vom Bottich 1 unter Umgehung des Abwassertanks 6 direkt zur Abwasserleitung 5 zu fördern.
- Die vierte Pumpe ist die bereits erwähnte Zirkulationspumpe 13.

Wie aus Fig. 1 ersichtlich, sind weiter zwei Entlüftungsleitungen vorgesehen. Dabei handelt es sich um Leitungen, die nach oben über das höchste Wasserstandsniveau geführt werden und dort mit der Umgebungsluft kommunizieren. Eine erste Entlüftungsleitung 18 ist am Abwassertank 6 angeordnet. Sie erlaubt es, den Abwassertank zu entleeren, insbesondere durch Abfördern des Prozesswassers mithilfe der ersten Pumpe 14. Eine zweite Entlüftungsleitung 19 ist in an sich bekannter Weise an der Abwasserleitung 5 angeordnet.

Die Funktionsweise des Geräts während einem Waschprogramm, d.h. einem Zyklus zum Waschen einer Wäschecharge, ist wie folgt:
1. Der Prozess beginnt in der Regel mit gefülltem Abwassertank 6. Das Wasser im Abwassertank 6 stammt z.B: aus einem früheren Waschprozess. Es befindet sich u.U. schon längere Zeit im Abwassertank 6 und besitzt z.B. ungefähr Zimmertemperatur.
2. Zu Beginn wird über das Frischwasserventil 3 Frischwasser für den Hauptwaschgang eingelassen, z.B. 20 bis 25 Liter für 8 kg Wäsche. Unter Normbedingungen besitzt dieses Frischwasser z.B. eine Temperatur von 15°C.
3. Gleichzeitig wird die Wärmepumpe gestartet, mit dem Ziel, Wärmeenergie aus dem Abwassertank 6 zu entziehen und dem Prozesswasser im Bottich 1 zuzuführen. Die Wärmepumpe wird erst ausgeschaltet, wenn das Prozesswasser im Abwassertank 6 teilweise vereist ist, oder wenn die Temperatur im Bottich 1 den gewünschten Wert erreicht hat, je nachdem, was zuerst eintritt. Erreicht die Temperatur im Bottich 1 bzw. im Reinigungswasser dabei einen vorgegebenen Wert (je nach Programm z.B. zwischen 20, 30, 40, 60 oder 95°C) nicht, so kann zusätzlich mit der elektrischen Heizung 2 elektrisch geheizt werden, entweder gleichzeitig mit oder nach dem Heizen mittels Wärmepumpe. Mit dem so aufgewärmten Prozesswasser wird die Wäsche gewaschen.
4. Nachdem die Wärmepumpe nicht mehr benötigt wird und während die Wäsche gewaschen wird, kann das verbleibende flüssige Prozesswasser im Abwassertank 6 durch Betreiben der ersten Pumpe 14 in die Abwasserleitung 5 gefördert werden. Die zweite Pumpe 15 ist dabei ausgeschaltet, so dass der Abwassertank 6 vom flüssigen Prozesswasser entleert wird.
5. Gegen Ende des Hauptwaschgangs wird die zweite Pumpe 15 in Betrieb gesetzt. Dadurch gelangt warmes Prozesswasser aus dem Bottich 1 in den Abwassertank 6 und trifft auf das dort verbleibende Eis. Das Eis wird dabei angeschmolzen oder ganz geschmolzen.
6. Über Frischwasserventil 3 wird neues Frischwasser (z.B. 15 bis 20 Liter) für eine Spülphase eingelassen.
7. Optional kann nun die Wärmepumpe wieder in Gang gesetzt werden, um die Wärme vom Abwassertank 6 in das Prozesswasser im Bottich 1 zu fördern. Wiederum kann dabei das Prozesswasser im Abwassertank 6 teilweise gefroren werden.
8. Das Wasser aus dem Bottich 1 wird wiederum abgepumpt und kann optional zum Enteisen des Abwassertanks 6 verwendet werden.
9. Über Frischwasserventil 3 wird neues Frischwasser (z.B. 15 bis 20 Liter) für eine Veredlungsphase (optional) eingelassen.
10. Die Wärmepumpe kann optional wieder in Gang gesetzt werden, um die Wärme vom Abwassertank 6 in das Prozesswasser im Bottich 1 zu fördern.
11. Das Wasser aus dem Bottich 1 wird wiederum abgepumpt und kann nötigenfalls dazu verwendet werden, den Abwassertank 6 zu enteisen.
12. Während einer Schleuderphase wird der Wäsche durch Zentrifugieren Wasser entzogen. Da dabei relativ schnell eine grössere Wassermenge anfällt, welche rasch abtransportiert werden muss, erfolgt in dieser Zeit die Entleerung des Bottichs vorzugsweise zumindest teilweise über die dritte Pumpe 16 und die Bypass-Leitung 17.

Wie sich aus dem Obigen ergibt, kann somit das Prozesswasser mit der Wärmepumpe geheizt werden, indem das Prozesswasser im Abwassertank teilweise gefroren wird. Zunächst wird dem Prozesswasser im Abwassertank somit die thermische Energie entzogen, die sich durch das Abkühlen des Wassers von seiner Starttemperatur auf ca. 0°C ergibt, und sodann kann auch noch die latente Wärme genutzt werden, die beim teilweisen Gefrieren des Wassers frei wird.

Vorzugsweise wird dem Abwassertank mit der Wärmepumpe aber nur so lange Wärme entzogen, dass ein Kanal mit flüssigem Prozesswasser durch den Abwassertank verbleibt. Dies erlaubt es, das kalte Prozesswasser in diesem Kanal schnell und einfach durch warmes Prozesswasser aus dem Bottich 1 zu ersetzen und so das Eis schnell abzutauen.

Zu Beginn einer Prozessphase, wie z.B. dem oben beschriebenen Hauptwaschen, wird das Prozesswasser im Bottich mit der Wärmepumpe geheizt. Sodann wird mindestens ein Teil des noch flüssigen Prozesswasseranteils, vorzugsweise möglichst alles noch flüssige Prozesswasser, aus dem Abwassertank 6 abgelassen. Nun kann, gegen Ende der Prozessphase, erwärmtes Prozesswasser aus dem Bottich in den Abwassertank 6 geführt werden. Dort kommt es mit dem Eis in Kontakt und beginnt dieses zu schmelzen.

Der Aufschmelzprozess kann wiederholt werden, indem mehrmals nacheinander
- das flüssige Prozesswasser aus dem teilweise vereisten Abwassertank 6 abgelassen wird und
- erwärmtes Prozesswasser aus dem Bottich 1 in den Abwassertank 6 geführt und damit das Eis im Abwassertank angeschmolzen wird.

Auf diese Weise ist z.B. am Schluss der Prozessphase wieder alles Wasser im Abwassertank geschmolzen und befindet sich auf einer möglichst hohen Resttemperatur.

Um Festzustellen, wie stark der Abwassertank 6 vereist ist, wird am Abwassertank 6 vorzugsweise ein Sensor zur Detektion des Vereisungsgrads angeordnet. Dabei kann es sich, in einer einfachen Ausführung, z.B. um einen Temperatursensor 22 handeln. Da sich das Wasser-Eis-Gemisch im Abwassertank 6 beim Abkühlen nicht im thermischen Gleichgewicht befindet und die Wärme bei beginnender Vereisung über das Eis entzogen wird, liegt die Wassertemperatur während dem Vereisungsprozess in der Regel etwas über 0°C, jene des Eises etwas unter 0°C, und die Wassertemperatur geht bei zunehmender Vereisung immer mehr gegen 0°C. So kann z.B. bei Unterschreiten einer gewissen Temperaturschwelle von z.B. 0.5°C an einer in einem gewissen Abstand vom Wärmetauscher des Verdampfers 10 angeordneten Stelle auf eine ausreichende Vereisung geschlossen werden.

Denkbar ist es auch, einen Temperatursensor so anzuordnen, dass er von der Front des wachsenden Eises ungefähr dann erreicht wird, wenn der Vereisungsgrad das gewünschte Mass erreicht hat. In diesem Fall kann die gewünschte Vereisung z.B. durch das Abfallen der Temperatur unter 0°C detektiert werden.

Es können auch Temperatursensoren an mehreren Orten vorgesehen sein, um ein genaueres Bild über den Vereisungsprozess zu gewinnen.

Anstelle von oder zusätzlich zu Temperatursensoren können auch andere Arten von Sensoren eingesetzt werden, die in der Lage sind, Eis von Wasser zu unterscheiden. Namentlich kann z.B. ein Leitfähigkeitssensor eingesetzt werden. Andere Technologien zur Detektion einer Vereisung sind dem Fachmann bekannt. Denkbar ist darüber hinaus auch, dass eine Vereisung aufgrund von Prozessparametern festgestellt werden kann, z.B. führt eine Vereisung zu einer zunehmenden thermischen Isolierung des Verdampfers 10 der Wärmepumpe und somit zu einem Abfall des Wirkungsgrads der Wärmepumpe.

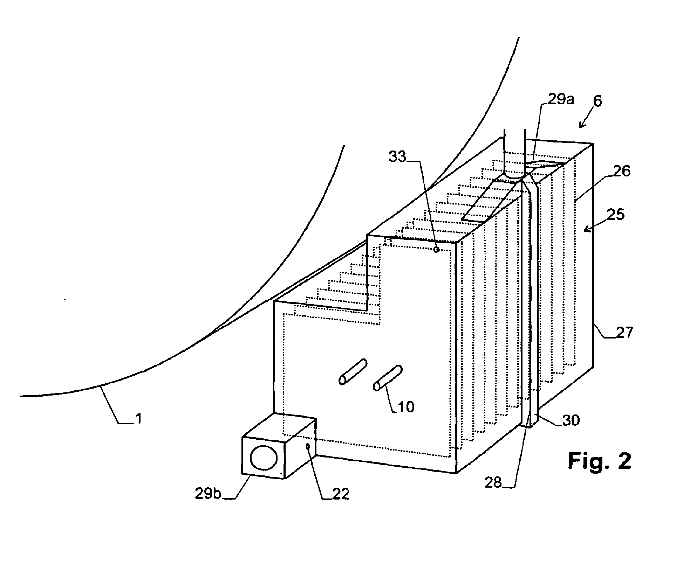

Fig. 2 zeigt eine konkrete Ausführung eines Abwassertanks 6, wie er z.B. in einer unteren Ecke des Geräts neben dem Bottich 1 angeordnet werden kann. Wie angedeutet, ist im Abwassertank eine Wärmetauscheranordnung 25 in Form eines Lamellenwärmetauschers angeordnet, umfassend mehrere, nebeneinander angeordnete Metalllamellen 26, die mit den Rohren des Verdampfers 10 thermisch in Kontakt stehen. Um die Wärmetauscheranordnung 25 sind die Wände 27 des Abwasserbehälters 6 angeordnet. In mindestens einer Wand 27 ist zudem eine Rinne 28 angeordnet, d.h. eine längliche Verformung der Wand 27 gegen aussen. Die Rinne erstreckt sich von einem Einlaufbereich 29a des Abwassertanks 6 zu einem Ablaufbereich 29b des Abwassertanks 6. Der Abstand der Wärmetauscheranordnung 25 vom Boden 30 der Rinne ist grösser als der Abstand der Wärmetauscheranordnung 25 von den übrigen Bereichen der Wand 27, so dass im Bereich der Rinne 28 ein Flüssigkeitskanal mit etwas vergrössertem Querschnitt entsteht, der weniger Tendenz zum Vereisen hat als die übrigen Bereiche des Abwassertanks 6. Auf diese Weise wird sichergestellt, dass auch bei relativ starker Vereisung noch ein Flüssigkeitskanal zwischen dem Einlaufbereich 29a und dem Ablaufbereich 29b des Abwassertanks 6 verbleibt.

Weiter ist am Abwassertank 6 mindestens ein Füllstandsensor 33 angeordnet. Er ist dazu ausgestaltet zu detektieren, ob der Abwassertank 6 voll ist. Dadurch wird es z.B. möglich, den teilweise vereisten Tank mit warmem Prozesswasser aus dem Bottich 1 zu befüllen, selbst wenn der Vereisungsgrad des Abwassertanks 6 nicht genau bekannt ist.

Um einen möglichst guten Wärmetransfer zwischen dem Eis und dem warmen Prozesswasser vom Bottich 1 zu gewährleisten, wird der Abwassertank 6 vorzugsweise nur so weit vereist, dass noch flüssige Bereiche zwischen den Lamellen 26 bleiben.

Soweit wurde die Erfindung im Rahmen einer Waschmaschine dargestellt. Es ist jedoch grundsätzlich auch denkbar, die gleiche Technologie bei einem Geschirrspüler einzusetzen. Auch bei einem Geschirrspüler kann das Prozesswasser im Bottich mit einer Wärmepumpe geheizt werden, deren Verdampfer beim Abwassertank angeordnet ist.

Um Probleme mit einhärtendem Fett und Schmutzablagerungen bei Geschirrspüler zu vermeiden, wird bei einem Geschirrspüler vorzugsweise ein Plattenwärmetauscher anstelle eines Lamellenwärmetauschers im Abwassertank eingesetzt. Dabei ist ein Lamellenwärmetauscher ein Wärmetauscher, in welchem mehrere, parallel angeordnete, voneinander beabstandete, vollmetallische Lamellen mit den Rohren des Verdampfers in thermischem Kontakt stehen, während ein Plattenwärmetauscher eine Vielzahl paralleler, voneinander beabstandeter, hohler Platten aufweist, durch welche das Kühlmedium zirkuliert und die den Verdampfer der Wärmepumpe bilden.

Die Erfindung eignet sich für den Einsatz in grossgewerblichen Geräten, wie z.B. in Restaurations-oder Hotelbetrieben, sowie in Haushaltgeräten, im letzteren Fall sowohl in Mehrfamilienhäusern als auch in Einfamilienhäusern oder Wohnungen.

Das Gerät kann gemäss dem erfindungsgemässen Verfahren sowie auch konventionell betrieben werden. Hierzu werden dem Benutzer in an sich bekannter Weise unterschiedliche Programmoptionen zur Auswahl zur Verfügung gestellt. Wählt der Benutzer eine der im Obigen beschriebenen Funktionsweisen aus, so führt die Steuerung 4 die hierzu notwendigen Schritte aus, wozu sie in geeigneter Weise, z.B. durch Mikroprogrammierung und/oder geeignete Logikschaltungen, ausgestaltet ist.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Reinigungsgerät, insbesondere Waschmaschine oder Geschirrspüler, zum Reinigen eines zu reinigenden Guts mittels Prozesswasser, mit
einem Bottich (1) zur Aufnahme des zu reinigenden Guts,
einem Abwassertank (6) zum Zwischenspeichern von Abwasser aus dem Bottich (1),
einer Wärmepumpe (7 - 10), um dem Abwassertank (6) Wärme zu entziehen und dem Prozesswasser im Bottich (1) zuzuführen, und
einer Steuerung (4) zum Steuern des Reinigungsgeräts,
**dadurch gekennzeichnet, dass** die Steuerung (4) dazu ausgestaltet ist, die Wärmepumpe (7 -10) derart zu steuern, dass dem Abwassertank mit der Wärmepumpe (7 - 10) so lange Wärme entzogen wird, dass ein Teil des Prozesswassers im Abwassertank (6) gefriert.

2. Reinigungsgerät nach Anspruch 1, wobei die Steuerung dazu ausgestaltet ist, mindestens einen Teil des im Abwassertank (6) befindlichen Eises durch Zuführen von Prozesswasser aus dem Bottich (1) zu schmelzen.

3. Reinigungsgerät nach Anspruch 2, wobei die Steuerung (4) dazu ausgestaltet ist, in einer Prozessphase Prozesswasser im Bottich (1) mit der Wärmepumpe (7 - 10) zu erwärmen und dabei das Abwasser im Abwassertank (6) teilweise zu gefrieren, sodann noch nicht gefrorenes Abwasser aus dem Abwassertank (6) abzulassen, sodann, später der Prozessphase, erwärmtes Prozesswasser aus dem Bottich (1) in den Abwassertank (6) zu führen, um dort gefrorenes Abwasser zu schmelzen.

4. Reinigungsgerät nach einem der vorangehenden Ansprüche, wobei am Abwassertank (6) ein Sensor (22) zur Detektion eines Vereisungsgrads des Abwassertanks (6) angeordnet ist.

5. Reinigungsgerät nach einem der vorangehenden Ansprüche, wobei am Abwassertank (6) eine Entlüftungsleitung (18) angeordnet ist.

6. Reinigungsgerät nach einem der vorangehenden Ansprüche, wobei im Abwassertank (6) eine Wärmetauscheranordnung (25) angeordnet ist, welche mit einem Verdampfer der Wärmepumpe (7 - 10) gekoppelt ist, und wobei an mindestens einer Wand (27) des Abwassertanks (6) mindestens eine Rinne (28) angeordnet ist, welche sich von einem Einlaufbereich (29a) des Abwassertanks (6) zu einen Ablaufbereich (29b) des Abwassertanks (6) erstreckt, wobei der Abstand der Wärmetascheranordnung (25) von einem Boden (30) der Rinne (28) grösser ist als der Abstand der Wärmetauscheranordnung (25) von der übrigen Wand (27).

7. Reinigungsgerät nach einem der vorangehenden Ansprüche, wobei zwischen dem Abwassertank (6) und einer Abwasserleitung (5) des Reinigungsgeräts eine erste Pumpe (14) angeordnet ist, um Prozesswasser aus dem Abwassertank (6) in die Abwasserleitung (5) zu fördern.

8. Reinigungsgerät nach einem der vorangehenden Ansprüche, wobei zwischen einem Ablaufbereich des Bottichs (1) und dem Abwassertank (6) eine zweite Pumpe (15) angeordnet ist, um Prozesswasser aus dem Bottich (1) in den Abwassertank (6) zu fördern.

9. Reinigungsgerät nach einem der vorangehenden Ansprüche, wobei zwischen einem Ablaufbereich des Bottichs (1) und einer Abwasserleitung (5) des Reinigungsgeräts eine am Abwassertank (6) vorbei führende Bypass-Leitung (17) vorgesehen ist, und wobei das Reinigungsgerät eine dritte Pumpe (16) aufweist, um Prozesswasser vom Bottich (1) durch die Bypass-Leitung (17) zur Abwasserleitung (5) zu fördern.

10. Reinigungsgerät nach einem der vorangehenden Ansprüche, wobei am Abwassertank (6) mindestens ein Füllstandsensor (33) angeordnet ist.

11. Verfahren zur Steuerung eines Reinigungsgeräts nach einem der vorangehenden Ansprüche.

12. Verfahren nach Anspruch 11, wobei dem Abwassertank (6) mit der Wärmepumpe (7 - 10) nur solange Wärme entzogen wird, dass ein Kanal mit flüssigem Prozesswasser durch den Abwassertank (6) verbleibt.

13. Verfahren nach Anspruch 12, wobei in einer Prozessphase Prozesswasser im Bottich (1) mit der Wärmepumpe (7 - 10) geheizt wird, sodann mindestens ein Teil des flüssigen Prozesswassers im Abwassertank (6) abgelassen wird, und sodann später in der Prozessphase erwärmtes Prozesswasser aus dem Bottich (1) in den Abwassertank (6) geführt wird.

14. Verfahren nach Anspruch 13, wobei in der Prozessphase mehrmals nacheinander
flüssiges Prozesswasser aus dem teilweise vereisten Abwassertank (6) abgelassen wird und
erwärmtes Prozesswasser aus dem Bottich (1) in den Abwassertank (6) geführt und damit das Eis im Abwassertank (6) angeschmolzen wird.

15. Verfahren nach einem der vorangehenden Ansprüche, wobei im Abwassertank (6) eine Wärmetauscheranordnung (25) mit mehreren, parallelen Lamellen (26) oder Platten angeordnet ist, wobei der Abwassertank (6) nur soweit vereist wird, dass noch flüssige Bereiche zwischen den Lamellen (26) oder Platten verbleiben.

## Claims

1. Cleaning device, particularly washing machine or dishwasher, for cleaning an object to be cleaned by means of process water, with
a vat (1) for receiving the object to be cleaned,
a waste water tank (6) for temporarily buffering waste water from the vat (1),
a heat pump (7 - 10) for extracting heat from the waste water tank (6) and transferring it to the process water in the vat (1), and
a controller (4) for controlling the cleaning device,
**characterized in that** the controller (4) is adapted to control the heat pump (7 - 10) in such a way that heat is extracted from the waste water tank by means of the heat pump (7 - 10) for as long as a part of the process water freezes in the waste water tank (6).

2. Cleaning device according to claim 1,
wherein the controller is adapted to melt at least a part of the ice located in the waste water tank (6) by supplying process water from the vat (1).

3. Cleaning device according to claim 2,
wherein the controller (4) is adapted to heat up, in a process phase, process water in the vat (1) by means of the heat pump (7 - 10) and at the same time to partially freeze the waste water in the waste water tank (6), thereafter to drain not yet frozen waste water from the waste water tank (6), thereafter, later in the process phase, to guide heated up process water from the vat (1) into the waste water tank (6) in order to melt frozen water therein.

4. Cleaning device according to one of the preceding claims, wherein a sensor (22) for detecting a freezing degree of the waste water tank (6) is arranged in the waste water tank (6).

5. Cleaning device according to one of the preceding claims, wherein a venting pipe (18) is arranged at the waste water tank (6).

6. Cleaning device according to one of the preceding claims, wherein a heat exchanger arrangement (25) is arranged in the waste water tank (6), which is coupled to an evaporator of the heat pump (7 - 10), and wherein at least a gutter (28) is arranged at at least a wall (27) of the waste water tank (6) and extends from an inlet area (29a) of the waste water tank (6) to an outlet area (29b) of the waste water tank (6), wherein the distance of the heat exchanger arrangement (25) from a bottom (30) of the gutter (28) is greater than the distance of the heat exchanger arrangement (25) from the rest of the wall (27).

7. Cleaning device according to one of the preceding claims, wherein a first pump (14) is arranged between the waste water tank (6) and a waste water pipe (5) of the cleaning device, in order to transport process water from the waste water tank (6) into the waste water pipe (5).

8. Cleaning device according to one of the preceding claims, wherein a second pump (15) is arranged between an outlet area of the vat (1) and the waste water tank (6), in order to transport process water from the vat (1) into the waste water tank (6).

9. Cleaning device according to one of the preceding claims, wherein a bypass pipe (17) is provided between an outlet area of the vat (1) and a waste water pipe (5) of the cleaning device, which passes the waste water tank (6), and wherein the cleaning device has a third pump (16) for transporting process water from the vat (1) through the bypass pipe (17) to the waste water pipe (5).

10. Cleaning device according to one of the preceding claims, wherein at least a level sensor (33) is arranged in the waste water tank (6).

11. Method for controlling a cleaning device according to one of the preceding claims.

12. Method according to claim 11, wherein heat is extracted from the waste water tank (6) by means of the heat pump (7 - 10) only for as long as a channel with liquid process water is still present in the waste water tank (6).

13. Method according to claim 12, wherein process water in the vat (1) is heated up in a process phase by means of the heat pump (7 - 10), thereafter at least a part of the liquid process water in the waste water tank (6) is drained, and thereafter, later in the process phase, heated up process water is guided from the vat (1) into the waste water tank (6).

14. Method according to claim 13, wherein in the process phase
liquid process water is drained out of the partially frozen waste water tank (6) and
heated up process water is guided from the vat (1) into the waste water tank (6) and thereby the ice in the waste water tank (6) is melted
several times consecutively.

15. Method according to one of the preceding claims, wherein a heat exchanger arrangement (25) with a plurality of parallel lamellae (26) or plates is arranged in the waste water tank(6), wherein the waste water tank (6) is only frozen to such an extent that still liquid areas are present between the lamellae (26) or plates.

## Revendications

1. Dispositif de nettoyage, particulièrement machine à laver ou lave-vaisselle, pour nettoyer un objet à nettoyer à l'aide de l'eau de processus, avec
un cuve (1) pour recevoir l'objet à nettoyer, un réservoir d'eau résiduelle (6) pour temporairement accumuler de l'eau résiduelle de la cuve (1),
une thermopompe (7 - 10) pour retirer de la chaleur du réservoir d'eau résiduelle (6) et de la alimenter en l'eau de processus dans la cuve (1), et
une commande (4) pour commander le dispositif de nettoyage,
**caractérisé en ce que** la commande (4) est adaptée à commander la thermopompe (7 - 10) de manière à retirer de la chaleur du réservoir d'eau résiduelle à l'aide de la thermopompe (7 - 10) jusqu'à ce qu'une partie de l'eau de processus gèle dans le réservoir d'eau résiduelle (6).

2. Dispositif de nettoyage selon la revendication 1, la commande étant adaptée à fondre au moins une partie de la glace qui se trouve dans le réservoir d'eau résiduelle (6) en alimentant de l'eau de processus de la cuve (1).

3. Dispositif de nettoyage selon la revendication 2, la commande (4) étant adaptée à chauffer de l'eau de processus dans la cuve (1) à l'aide de la thermopompe (7 - 10) dans une phase de processus et au même temps de partiellement geler l'eau résiduelle dans le réservoir d'eau résiduelle (6), ensuite de drainer de l'eau non encore gelée du réservoir d'eau résiduelle (6), ensuite, plus tard dans la phase de processus, de guider de l'eau de processus chauffée de la cuve (1) dans le réservoir d'eau résiduelle (6) afin de fondre de l'eau gelée là-bas.

4. Dispositif de nettoyage selon l'une des revendications précédentes, un capteur (22) pour la détection d'un degré de gel du réservoir d'eau résiduelle (6) étant arrangé au réservoir d'eau résiduelle (6).

5. Dispositif de nettoyage selon l'une des revendications précédentes, un tuyau de ventilation (18) étant arrangé au réservoir d'eau résiduelle (6).

6. Dispositif de nettoyage selon l'une des revendications précédentes, un arrangement d'échangeur de chaleur (25) étant arrangé dans le réservoir d'eau résiduelle (6) et étant couplé à un évaporateur de la thermopompe (7 - 10), et au moins un conduit (28) qui s'étend d'une zone d'entrée (29a) du réservoir d'eau résiduelle (6) jusqu'à une zone de sortie (29b) du réservoir d'eau résiduelle (6) étant arrangé à au moins une paroi du réservoir d'eau résiduelle (6), la distance de l'arrangement d'échangeur de chaleur (25) d'un fond (30) du conduit (28) étant supérieure à la distance de l'arrangement d'échangeur de chaleur (25) du reste de la paroi (27).

7. Dispositif de nettoyage selon l'une des revendications précédentes, une première pompe (14) étant arrangée entre le réservoir d'eau résiduelle (6) et un tuyau d'eau résiduelle (5) du dispositif de nettoyage, afin de transporter de l'eau de processus du réservoir d'eau résiduelle (6) dans le tuyau d'eau résiduelle (5).

8. Dispositif de nettoyage selon l'une des revendications précédentes, une deuxième pompe (15) étant arrangée entre une zone de sortie de la cuve (1) et le réservoir d'eau résiduelle (6), afin de transporter de l'eau de processus de la cuve (1) dans le réservoir d'eau résiduelle (6).

9. Dispositif de nettoyage selon l'une des revendications précédentes, un tuyau de contournement (17) qui passe par le réservoir d'eau résiduelle (6) étant prévu entre une zone de sortie de la cuve (1) et un tuyau d'eau résiduelle (5) du dispositif de nettoyage, et le dispositif de nettoyage ayant une troisième pompe (16) pour transporter de l'eau de processus de la cuve (1) à travers du tuyau de contournement (17) au tuyau d'eau résiduelle (5).

10. Dispositif de nettoyage selon l'une des revendications précédentes, au moins un capteur de niveau (33) étant arrangé au réservoir d'eau résiduelle (6).

11. Méthode pour commander un dispositif de nettoyage selon l'une des revendications précédentes.

12. Méthode selon la revendication 11, de la chaleur étant enlevée du réservoir d'eau résiduelle (6) avec la thermopompe (7 - 10) seulement pendant qu'un canal avec de l'eau de processus liquide reste à travers du réservoir d'eau résiduelle (6).

13. Méthode selon la revendication 12, de l'eau de processus dans la cuve (1) étant chauffée avec la thermopompe (7 - 10) dans une première phase de processus, ensuite au moins une partie de l'eau de processus liquide du réservoir d'eau résiduelle (6) étant drainée et ensuite, plus tard dans la phase de processus, de l'eau de processus chauffée étant guidée de la cuve (1) dans le réservoir d'eau résiduelle (6).

14. Méthode selon la revendication 13,
de l'eau de processus liquide étant drainée du réservoir d'eau résiduelle (6) qui est partiellement gelé et
de l'eau de processus chauffée étant guidée de la cuve (1) dans le réservoir d'eau résiduelle (6) et la glace dans le réservoir d'eau résiduelle (6) étant fondue par cela
plusieurs fois de suite dans la phase de processus.

15. Méthode selon l'une des revendications précédentes, un arrangement d'échangeur de chaleur (25) avec plusieurs lamelles (26) parallèles ou des plaques étant arrangé dans le réservoir d'eau résiduelle (6), le réservoir d'eau résiduelle (6) étant gelé de manière qu'il reste encore des zones liquides entre les lamelles (26) ou les plaques.
